# EUROPÄISCHE PATENTSCHRIFT

(11) **EP 1 451 480 B1**
(45) Veröffentlichungstag und Bekanntmachung des Hinweises auf die Patenterteilung: **17.01.2007**
(21) Anmeldenummer: 02779258.9
(22) Anmeldetag: 06.08.2002
(51) Int. Cl.: F16D 25/0638

(54) **KUPPLUNGSANORDNUNG**
CLUTCH SYSTEM
SYSTEME D'EMBRAYAGE

(30) Priorität: 19.10.2001 DE 10151654
(43) Veröffentlichungstag der Anmeldung: 01.09.2004
(60) Teilanmeldung: 05014863.4
(73) Patentinhaber: ZF Sachs AG, 97424 Schweinfurt (DE)
(72) Erfinder: SUDAU, Jörg, 97464 Niederwerrn (DE)
(86) Internationale Anmeldenummer: PCT/EP2002/008752
(87) Internationale Veröffentlichungsnummer: WO 2003/036117

(56) Entgegenhaltungen:
- DE-A- 4 413 171
- DE-A- 10 004 189
- JP-A- 4 140 521
- JP-A- 4 165 122
- JP-A- 59 113 324
- US-A- 2 880 834
- US-A- 5 483 850
- US-A- 5 913 397

## Beschreibung

### Technisches Gebiet

Die vorliegende Erfindung betrifft eine Kupplungsanordnung nach dem Oberbegriff des Anspruches 1.

### Stand der Technik

Durch die DE 44 13 171 A1, Fig. 6 ist eine Kupplungsanordnung mit einer mit Fluid gefüllten, um eine Drehachse (A) bewegbaren Gehäuseanordnung bekannt, die insbesondere für ein Kraftfahrzeug vorgesehen ist. Die Gehäuseanordnung ist mit einer drehfesten Ankoppelung an eine Antriebswelle, wie der Kurbelwelle einer als Antriebsaggregat dienenden Brennkraftmaschine versehen und umfasst eine erste Gehäusenabe an einer einem Getriebe zugewandt positionierten Seite sowie eine zweite Gehäusenabe an einer einem Antriebsaggregat zugewandt positionierten Seite Die Gehäuseanordnung ist über ihre zweite Gehäusenabe unter Bildung eines Radiallagerungsbereiches bezüglich einer Abtriebswelle, die als Getriebeeingangswelle ausgebildet sein kann, gelagert. Darüber hinaus umschließt die der Drehbewegung der Antriebswelle relativbewegungsfrei folgende Gehäuseanordnung eine Mehrzahl von mit ihr drehfeste Außenlamellen, die als erstes Reiborgan wirksam und mit einer Mehrzahl von als zweites Reiborgan dienenden Innenlamellen in Wirkverbindung bringbar sind, wobei das zweite Reiborgan über eine Abtriebsnabe mit der Abtriebswelle zur gemeinsamen Drehung verbunden ist. Durch die beiden Reiborgane wird eine Übertragung eines von der Antriebswelle auf die Gehäuseanordnung der Kupplungsanordnung übertragenen Momentes auf die Abtriebswelle ermöglicht.

Ein wesentliches Problem bei derartigen Kupplungsanorcinungen ist, dass an der Antriebswelle sowohl Axial- als auch Radialkräfte einander überlagert auftreten und als Taumelbewegungen auf die Gehäuseanordnung der Kupplungsvorrichtung übertragen werden können. Aufgrund des Radiallagerungsbereiches ist die Gehäuseanordnung zwar antriebsseitig gegenüber der Abtriebswelle zentriert, vermag aber abtriebsseitig Bewegungen mit einer relativ großen Radialkomponente zu vollziehen, zumal die Gehäuseanordnung mit Fluid gefüllt und damit erheblichen Fliehkrafteinflüssen unterworfen ist. Dies wirkt sich zum einen negativ auf die axiale Positionierung der Abtriebsnabe mittels einer an der abtriebsseitigen Gehäusenabe aufgenommenen Axiallagerung aus, zum anderen aber auch bei der Abdichtung eines radial zwischen der abtriebsseitigen Gehäusenabe und der Abtriebswelle verlaufenden Ringkanals, der als Versorgungsweg der Kupplungsvorrichtung für das besagte Fluid dient.

Die bei Taumelbewegungen anliegenden abtriebsseitigen Bewegungen der gegenüber der Abtriebswelle zentrierten Gehäuseanordnung werfen im Hinblick auf die Abtriebsnabe das weitere Problem auf, dass die Abtriebsnabe im radial äußeren Bereich bei in Antriebsverbindung miteinander stehenden Lamellen zumindest im Wesentlichen gegenüber der Gehäuseanordnung zentriert ist, im radial inneren Bereich dagegen über eine Verzahnung mit der Abtriebswelle. Gerade diese Verzahnung im radial inneren Bereich ist dadurch beträchtlichen Belastungen und damit einem erhöhten Verschleiß unterworfen.

Aus der US 2,880,834 A ist eine weitere Kupplungsanordnung bekannt, bei welcher eine Momentenübertragung zwischen einer Antriebswelle und einer Abtriebswelle mittels erster und zweiter Reiborgane erfolgt, wobei die Antriebswelle über einen ersten Reiborganträger an den ersten Reiborganen und die Abtriebswelle über einen zweiten Reiborganträger an den zweiten Reiborganen angreift. Allerdings liegt bei dieser Kupplungsanordnung die Gehäuseanordnung nicht im Momentenübertragungsweg, sondern ist statt dessen drehfest. Dadurch bleibt die Gehäuseanordnung bezüglich ihrer Position durch Taumelbewegungen der Antriebswelle unbeeinflusst, und ist auch nicht durch fliehkraftbedingte Fluidkräfte belastet. Lediglich die An- und die Abtriebswelle sowie die beiden Reiborganträger inklusive der Reiborgane vermögen eine Rotationsbewegung auszuführen, und zwar relativ zur Gehäuseanordnung. Die Momentenübertragung erfolgt also, unter Umgehung der Gehäuseanordnung, allein durch die Reiborgane.

Die gleiche Situation im Hinblick auf die Momentenübertragung findet sich auch bei Kupplungsvorrichtungen, wie sie in der DE 100 04 189 A1, der JP 59 - 113324 A oder der JP 04 - 140521 A behandelt sind. Bei diesen Kupplungsvorrichtungen ist allerdings keine eigene Gehäuseanordnung vorhanden. Statt dessen werden die jeweiligen Reiborganträger mit den zugeordneten Reiborganen durch ein ortsfestes Getriebegehäuse umhüllt.

Bei der vorgenannten DE 100 04 189 A1 ist zwar eine von zwei Abtriebswellen mit mehreren in axialem Abstand voneinander angeordneten Radiallagerungsbereichen versehen, jedoch wirken diese Radiallagerungsbereiche unmittelbar mit einer den Reiborganträgem zugeordneten Abtriebsnabe zusammen, und vermögen daher keine Zentrierung der Abtriebswelle gegenüber dem Getriebegehäuse zu erzeugen.

### Aufgabe der Erfindung

Es ist die Aufgabe der vorliegenden Erfindung, eine Kupplungsanordnung, welche über eine drehfeste Ankoppelung einer mit Fluid befüllten Gehäuseanordnung an eine Antriebswelle eines Antriebsaggregates verfügt, derart auszugestalten, dass auch bei von der Antriebswelle eingeleiteten Taumelbewegungen die Gehäuseanordnung in einer vorbestimmten radialen Relativlage und eine Abtriebsnabe in einer vorbestimmten radialen und axialen Relativlage gegenüber der Antriebswelle und einer Abtriebswelle verbleibt.

### Darstellung der Erfindung

Erfindungsgemäß wird diese Aufgabe durch die im Anspruch 1 angegebenen Merkmale gelöst. Dabei ist vorgesehen, dass die Kupplungsanordnung an wenigstens zwei in Richtung einer Drehachse zueinander in Abstand liegenden Radiallagerungsbereichen in radialer Richtung gelagert ist. Hierdurch wird neben der exakten radialen Positionierung gleichzeitig auch das Kippen der gesamten Kupplungsanordnung vermieden. Es ist somit für eine exakte Positionierung der Kupplungsanordnung gesorgt, so dass insbesondere das Auftreten von durch Schrägstellung erzeugten Taumelbewegungen ausgeschlossen werden kann.

Gemäß einem ersten Aspekt der vorliegenden Erfindung ist bei der erfindungsgemäßen Kupplungsanordnung eine erste Gehäusenabe der Gehäuseanordnung an einer einem Getriebe zugewandt positionierten Seite in einem ersten der Radiallagerungsbereiche gelagert. Da im Allgemeinen als Abtriebswelle eine Getriebeeingangswelle dient und eine derartige Getriebeeingangswelle im Getriebe selbst in definierter Positionierung gehalten ist, wird die erste Gehäusenabe bezüglich der Abtriebswelle gelagert. Alternativ oder zusätzlich ist es selbstverständlich auch möglich, dass die erste Gehäusenabe bezüglich eines Getriebegehäuses gelagert ist.

Eine zweite Gehäusenabe der Gehäuseanordnung ist an einer einem Antriebsaggregat zugewandt positionierten Seite in einem zweiten der Radiallagerungsbereiche gelagert. Auch hier ist die zweite Gehäusenabe bezüglich der Abtriebswelle gelagert. Alternativ ist es selbstverständlich auch möglich, die zweite Gehäusenabe bezüglich einer Antriebswelle eines Antriebsaggregats zu lagern. Auch derartige Antriebswellen, beispielsweise Kurbelwellen von Brennkraftmaschinen, sind in der Brennkraftmaschine und somit im gesamten Antriebssystem in definierter und fester Position gehaltert.

Die Gehäuseanordnung dient mittels der zweiten Gehäusenabe über ein weiteres Radiallager zur Lagerung einer Abtriebsnabe in radialer Richtung. Diese Abtriebsnabe ist in der Gehäuseanordnung im radial inneren Bereich - bezogen auf eine Drehachse A - vorgesehen und mit Lamellen drehfest, aber axial bewegbar, verbunden. In der Gehäuseanordnung sind weitere Lamellen vorgesehen, die mit der Gehäuseanordnung drehfest, bezüglich dieser jedoch axial verlagerbar sind.

Gemäß einem weiteren Aspekt der vorliegenden Erfindung ist vorgesehen, dass die Kupplungsanordnung vermittels einer Axiallagerungsanordnung bezüglich einer Antriebswelle eines Antriebsaggregats abgestützt ist. Die axiale Abstützung bezüglich der Antriebswelle nimmt die bereits angesprochenen Axialkräfte auf, so dass beispielsweise die der Drehmomentübertragung dienenden Organe von Axialkräften im Wesentlichen freigehalten werden und ihre Drehmomentübertragungsfunktion davon unbeeinträchtigt erfüllen können. Dies trifft insbesondere dann zu, wenn die Drehmomentübertragungsverbindung über ein Zwei-Massenschwungrad erfolgt.

Die vorliegende Erfindung wird nachfolgend mit Bezug auf die beiliegenden Zeichnungen anhand bevorzugter Ausgestaltungsform detailliert beschrieben. Es zeigt:
- Fig. 1: eine Teil-Längsschnittansicht einer erfindungsgemäßen Kupplungsanordnung gemäß einer ersten Ausgestaltungsform;
- Fig. 2: eine der Fig. 1 entsprechende Ansicht einer alternativen Ausgestaltungsform;
- Fig. 3: eine weitere der Fig. 1 entsprechende Ansicht einer alternativen Ausgestaltungsform einer erfindungsgemäßen Kupplungsanordnung;

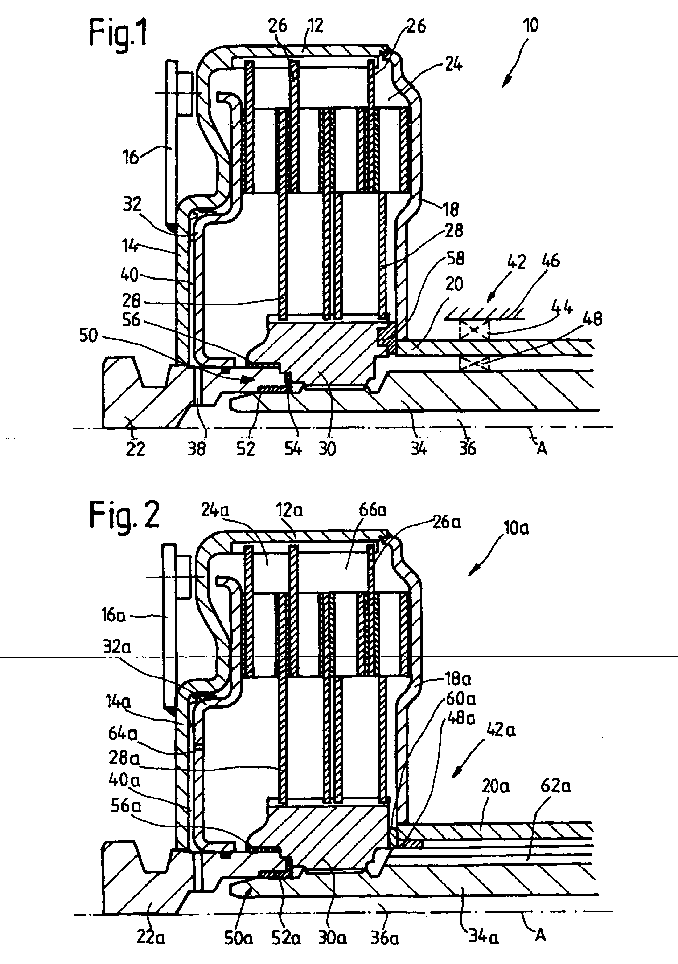

In Fig. 1 ist eine erfindungsgemäße Kupplungsanordnung allgemein mit 10 bezeichnet. Die Kupplungsanordnung 10 umfasst eine Gehäuseanordnung 12, die im Bereich einer motomah zu positionierenden ersten Gehäuseschale 14 ein Mitnahmeelement 16 trägt. Über dieses Mitnahmeelement 16 kann beispielsweise unter Einsatz einer sogenannten Flexplatte o. dgl. eine drehfeste Ankopplung an die Antriebswelle eines Antriebsaggregats, also beispielsweise eine Kurbelwelle erfolgen. Am axial freien Ende ist mit der ersten Gehäuseschale 14 eine zweite Gehäuseschale 18 verbunden, welche im radial inneren Bereich mit einer näherungsweise zylindrisch ausgebildeten ersten Gehäusenabe 20, im Allgemeinen auch als Pumpennabe bezeichnet, fest verbunden ist. Die erste Gehäuseschale 14 ist im radial inneren Bereich mit einer zweiten Gehäusenabe 22, im Allgemeinen auch Antriebsnabe bezeichnet, fest verbunden.

In dem von der Gehäuseanordnung 12 umschlossenen Innenraum 24 ist eine Mehrzahl erster Lamellen 26 vorgesehen, die in an sich bekannter Art und Weise mit der Gehäuseanordnung 12 drehfest, bezüglich dieser jedoch axial verlagerbar verbunden sind. Ferner sind mehrere zweite Lamellen 28 vorgesehen, die mit einer in der Gehäuseanordnung 12 im radial inneren Bereich - bezogen auf eine Drehachse A - vorgesehenen Abtriebsnabe 30 drehfest, bezüglich dieser jedoch axial bewegbar verbunden sind. Es sei darauf hingewiesen, dass die verschiedenen Lamellen 26, 28 in herkömmlicher Weise aufgebaut sein können und zumindest teilweise Reibbeläge zur gegenseitigen Reibanlage tragen können. Ein im Gehäuseinneren 24 vorgesehener Kupplungskolben 32 kann durch Fluidbeaufschlagung axial bezüglich der Gehäuseanordnung 12 verschoben werden, wobei dann die verschiedenen Lamellen 26, 28 in gegenseitige Reibanlage gebracht werden und überdies im getriebenahen Bereich gegen die Gehäuseanordnung 12 gepresst werden. Es wird auf diese Art und Weise die Drehmomentübertragungsverbindung hergestellt.

Die Abtriebsnabe 30 weist im radial inneren Bereich eine Keilverzahnung auf, die mit einer komplementären Keilverzahnung einer im Allgemeinen als Getriebeeingangswelle dienenden Abtriebswelle 34 in drehfesten Eingriff bringbar ist. Die Getriebeeingangswelle 34 durchsetzt die als Hohlwelle ausgebildete erste Gehäusenabe 20 im Wesentlichen konzentrisch und weist in ihrem radial inneren Bereich eine Durchgangsöffnung 36 auf, über die Fluid herangefördert werden kann und über in der Antriebsnabe 22 vorgesehene Bohrungen 38 in einen zwischen dem Kupplungskolben 32 und der Gehäuseschale 14 gebildeten Raumbereich 40 geleitet werden kann. Es kann auf diese Art und Weise in diesem Raumbereich 40 ein Überdruck erzeugt werden, um den Kupplungskolben 32 gegen die Lamellen 26 bzw. 28 zu pressen.

Man erkennt in Fig. 1 weiter, dass die Kupplungsanordnung 10 an zwei axial bezüglich einenander versetzt liegenden Bereichen bezüglich antriebssystemfesten Komponenten, also letztendlich nicht der Kupplungsanordnung selbst zuzurechnenden Komponenten, in radialer Richtung gelagert ist. In einem ersten Radiallagerungsbereich 42 ist die Kupplungsanordnung 10 durch ein Radiallager 44 bezüglich des Getriebegehäuses 46 in radialer Richtung gelagert. Dabei liegt dieses Radiallager 44 zwischen dem Getriebegehäuse 46 und der ersten Gehäusenabe bzw. Pumpennabe 20. Alternativ oder zusätzlich kann in diesem ersten Radiallagerungsbereich 42 ein Radiallager 48 vorgesehen sein, das zwischen der Pumpennabe 20 und der Getriebeeingangswelle 34 liegt. Da die Getriebeeingangswelle 34 in einem Antriebssystem zwar drehbar ist, ansonsten jedoch als feststehende Komponente betrachtet werden kann, kann auf diese Art und Weise ebenso in dem dem Getriebe nah liegenden Bereich die Kupplungsanordnung 10 in radialer Richtung abgestützt werden.

Ein zweiter Radiallagerungsbereich 50 ist an der dem Antriebsaggregat zugewandten Seite der Kupplungsanordnung 10 vorgesehen. An diesen zweiten Radiallagerungsbereich 50 ist ein Radiallager 52 vorgesehen, an welchem die zweite Gehäusenabe oder Antriebsnabe 22 in radialer Richtung bezüglich der Getriebeeingangswelle 34 abgestützt. Während die beiden bereits angesprochenen Radiallager 46, 48 als Wälzkörperlager oder auch als Gleitlager ausgebildet sein können, ist das Radiallager 52 vorzugsweise als Gleitlager bzw. Gleitlagerungshülse ausgebildet, die mit einem radialen Fortsatz 54 gleichzeitig auch die Axiallagerung der Abtriebsnabe 30 bezüglich der Gehäuseanordnung 12, hier der Gehäusenabe 22, vorsieht. Über ein weiteres Radiallager 56 ist die Abtriebsnabe 30 auf der Gehäusenabe 22 in radialer Richtung gelagert. Einen weiteren Beitrag zur Radiallagerung der Abtriebsnabe 30 bildet der bereits angesprochene verzahnungsartige Eingriff derselben mit der Getriebeeingangswelle 34. Die Axialabstützung der Abtriebsnabe 30 in der anderen axialen Richtung, also zur Getriebeseite hin, erfolgt über einen Gleitlagerring 58, der an der Gehäuseschale 18 bzw. dem axialen Endbereich der Gehäusenabe 20 abgestützt sein kann.

Man erkennt in Fig. 1, dass als wesentliche der Radiallagerung der gesamten Kupplungsanordnung 10 dienenende Komponente die Getriebeeingangswelle 34 zum Einsatz kommt. Insbesondere bei Einsatz der beiden Radiallager 52, 48 kann die gesamte Radiallagerung an der Getriebeeingangswelle 34 erfolgen. Diese Anordnung hat den Vorteil, das eine vergleichsweise kurz bauende Gehäusenabe 20 zum Einsatz kommen kann.

Bei der in Fig. 1 dargestellten Ausgestaltungsform werden die im Betrieb auftretenden und auf das Antriebsaggregat zu gerichteten Axialkräfte, welche im Wesentlichen durch die druckmäßige Abstützung im radial inneren Bereich bezüglich der Getriebeanordnung erzeugt werden, durch die auch die Drehankopplung vorsehende Flexplatte oder ein sonstiges Kopplungsorgan übernommen.

Eine abgewandelte Ausgestaltungsform ist in Fig. 2 dargestellt. Komponenten, welche vorangehend beschriebenen Komponenten hinsichtlich Aufbau bzw. Funktion entsprechen, sind mit dem gleichen Bezugszeichen unter Hinzufügung eines Anhangs "a" bezeichnet. Im Folgenden wird auf die wesentlichen konstruktiven Unterschiede eingegangen.

Man erkennt, dass im ersten Radiaiiagerungsbereich 42a das Radiallager 48a als Gleitlagerhülse ausgebildet ist und zwischen der Gehäusenabe bzw. Pumpennabe 20a und der Getriebeeingangswelle 34a liegt. Das Radiallager 48a bildet mit einem flanschartig nach radial außen greifenden Bereich 60a gleichzeitig auch das Axiallager für die Abtriebsnabe 30a. Dieser flanschartige Abschnitt 60a kann in Umfangsrichtung an mehreren Bereichen unterbrochen sein, um hier einen Fluidaustausch zwischen dem Innenraum 24a der Gehäuseanordnung 12a und in der Getriebeeingangswelle 34a zur Drehachse A exzentrisch vorgesehenen Fluidkanälen 62a herzustellen. Man erkennt dass der in Fig. 2 dargestellte Aufbau von dem sogenannten Zwei-LeitungsTyp ist, bei weichem beispielsweise zum Herstellen des Einkuppelzustands das Fluid über die zentrale Öffnung 36a in der Getriebeeingangswelle 34a in den Raumbereich 40a geleitet wird und von diesem Raumbereich 40a über eine oder mehrere Drosselöffnungen 64a in einen im Wesentlichen die Lamellen 26a, 28a enthaltenden Raumbereich 66a strömen kann. Von diesem Raumbereich kann dann über die angesprochenen Fluidkanäle 62a das Fluid abgezogen werden. Soll die Kupplungsanordnung 10a in einen ausgekuppelten Zustand gebracht werden, wird die Fluidströmungsrichtung umgekehrt.

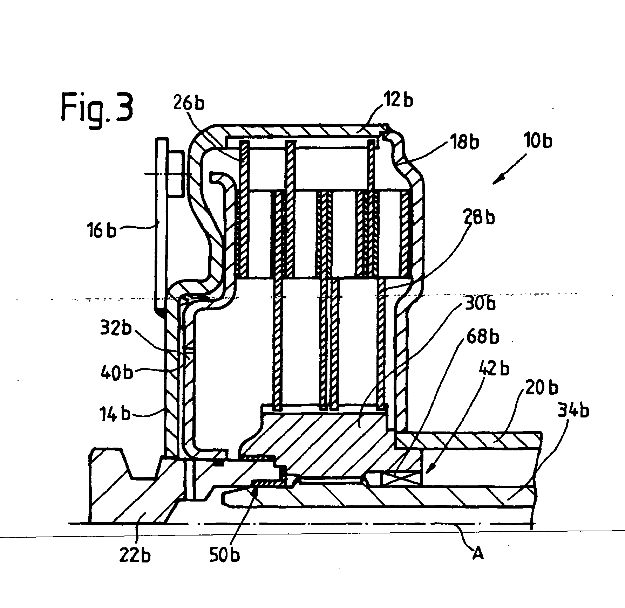

Es sei darauf hingewiesen, dass selbstverständlich auch bei der Ausgestaltungsform gemäß Fig. 1 bzw. der nachfolgend noch beschriebenen Ausgestaltungsform gemäß Figur 3 derartige Fluidströmungsanordnungen vorgesehen sein können, wobei dann, wenn beispielsweise die in Fig. 2 erkennbaren Kanäle 62a nicht vorhanden sind, die Fluidabfuhr bzw. -zufuhr in dem zwischen der Pumpennabe und der Getriebeeingangswelle gebildeten Raumbereich erfolgen kann.

Eine weitere alternative Ausgestaltungsform der erfindungsgemäßen Kupplungsanordnung ist in Fig. 3 gezeigt. Komponenten, welche vorangehenden beschriebenen Komponenten hinsichtlich Aufbau bzw. Funktion entsprechen, sind mit dem gleichen Bezugszeichen unter Hinzufügung eines Anhangs "b" bezeichnet.

Während der Aufbau des zweiten Lagerungsbereichs 50b so ist, wie vorangehend mit Bezug auf die Figuren 1 und 2 beschrieben, erkennt man, dass der erste Lagerungsbereich 42b nunmher ein Radiallager 68b aufweist, das in dem dem Getriebe zugewandt zu positionierenden Endbereich der Abtriebsnabe 30b zwischen dieser und der Getriebeeingangswelle 34b positioniert ist. Des Weiteren ist die Gehäusenabe oder Pumpennabe 20b ggf. unter Zwischenlagerung einer Gleitbeschichtung an der Gehäuseanordnung 12b oder der Abtriebsnabe 30b direkt in radialer Richtung abgestützt. Gleichzeitig kann hier auch eine Axialabstützung für die Abtriebsnabe 30b vorgesehen sein. Es ist somit die Gehäuseanordnung 12b wieder an zwei in axialem Abstand liegenden Radiallagerungsbereichen 42b, 50b unmittelbar an der Getriebeeingangswelle 34b abgestützt.

## Patentansprüche

1. Kupplungsanordnung, insbesondere für ein Kraftfahrzeug mit einer Drehachse (A), versehen mit einer drehfesten Ankoppelung einer mit Fluid gefüllten Gehäuseanordnung (12; 12a; 12b) an eine Antriebswelle eines Antriebsaggregates, umfassend:
a) eine erste Gehäusenabe (20; 20a; 20b) an einer einem Getriebe zugewandt positionierten Seite der Gehäuseanordnung (12; 12a; 12b),
b) eine zweite Gehäusenabe (22; 22a; 22b) an einer einem Antriebsaggregat zugewandt positionierten Seite der Gehäuseanordnung (12; 12a; 12b), in einem Radiallagerungsbereich (50; 50a, 50b) bezüglich einer Abtriebswelle (34; 34a; 34b) gelagert,
c) wenigstens ein mit der Gehäuseanordnung (12; 12a; 12b) zur gemeinsamen Drehung verbundenes erstes Reiborgan (26; 26a; 26b),
d) wenigstens ein über eine Abtriebsnabe (30) mit der Abtriebswelle (34; 34a; 34b) zur gemeinsamen Drehung verbundenes zweites Reiborgan (28; 28a; 28b),
e) ein weiterer Radiallagerungsbereich (42, 42a, 42b), der gegenüber dem an der dem Antriebsaggregat zugewandten Seite liegenden Radiallagerungsbereich (50; 50a; 50b) mit Abstand in Richtung der Drehachse (A) und nah am Getriebe liegend angeordnet ist, und in welchem die erste Gehäusenabe (20; 20a; 20b) bezüglich der Abtriebswelle (34; 34a; 34b) gelagert ist,
**dadurch gekennzeichnet, daß** die Kupplungsanordnung, umfasst:
f) eine Axiallagerung (54), die in dem an der dem Antriebsaggregat zugewandten Seite liegenden Radiallagerungsbereich (50; 50a; 50b; 50c; 50d) angeordnet und für die Abtriebsnabe (30) bezüglich der Gehäusenabe (22) und damit der Gehäuseanordnung (12) vorgesehen ist, und
g) ein weiteres Radiallager (56) über das die Abtriebsnabe (30) auf der Gehäusenabe (22) in radialer Richtung gelagert ist.

2. Kupplungsanordnung nach Anspruch 1,
**dadurch gekennzeichnet,**
**dass** in dem weiteren Radiallagerungsbereich (42) die erste Gehäusenabe (20) über ein Radiallager (44) bezüglich eines Getriebegehäuses (46) gelagert ist.

3. Kupplungsanordnung nach Anspruch 1,
**dadurch gekennzeichnet,**
**dass** in dem weiteren Radiallagerungsbereich (42a) die erste Gehäusenabe (20a) mit einem zur Bildung einer Axiallagerung für die Abtriebsnabe (30a) flanschartig nach radial außen greifenden Bereich (60a) zusammen wirkt.

4. Kupplungsanordnung nach Anspruch 1,
**dadurch gekennzeichnet,**
**dass** in dem weiteren Radiallagerungsbereich (42b) die erste Gehäusenabe (20b) über die Abtriebsnabe (30b) auf ein Radiallager (68b) einwirkt, das zwischen dieser Abtriebsnabe (30b) und der Abtriebswelle (34) positioniert ist.

## Claims

1. Clutch arrangement, especially for a motor vehicle, having an axis of rotation (A), provided with a rotationally fixed coupling of a fluid-filled housing arrangement (12; 12a; 12b) to a drive shaft of a power unit, comprising:
a) a first housing hub (20; 20a; 20b) on a side of the housing arrangement (12; 12a; 12b) positioned facing a transmission,
b) a second housing hub (22; 22a; 22b) on a side of the housing arrangement (12; 12a; 12b) positioned facing a power unit, and in a radial bearing area (50; 50a; 50b) supported in relation to an output shaft (34; 34a; 34b),
c) at least a first friction member (26; 26a; 26b) connected to the housing arrangement (12; 12a; 12b) for their joint rotation,
d) at least a second friction member (28; 28a; 28b) connected by way of a driven hub (30) to the output shaft (34; 34a; 34b) for their joint rotation,
e) a further radial bearing area (42, 42a, 42b), which in relation to the radial bearing area (50; 50a; 50b) situated on the side facing the power unit is arranged at a distance in the direction of the axis of rotation (A) and close to the transmission, and in which the first housing hub (20; 20a; 20b) is supported in relation to the output shaft (34; 34a; 34b),
**characterized in that** the clutch arrangement comprises:
f) an axial bearing (54), which is arranged in the radial bearing area (50; 50a; 50b; 50c; 50d) situated on the side facing the power unit and is intended for the driven hub (30) in relation to the housing hub (22) and hence the housing arrangement (12), and
g) a further radial bearing (56), by way of which the driven hub (30) is supported in a radial direction on the housing hub (22).

2. Clutch arrangement according to Claim 1, **characterized in that** in the further radial bearing area (42) the first housing hub (20) is supported by way of a radial bearing (44) in relation to a transmission housing (46).

3. Clutch arrangement according to Claim 1, **characterized in that** in the further radial bearing area (42a) the first housing hub (20a) interacts with an area (60a) extending radially outwards in the manner of a flange in order to form an axial bearing for the driven hub (30a).

4. Clutch arrangement according to Claim 1, **characterized in that** in the further radial bearing area (42b) the first housing hub (20b) acts by way of the driven hub (30b) on a radial bearing (68b), which is positioned between this driven hub (30b) and the output shaft (34).

## Revendications

1. Mécanisme d'embrayage, notamment pour véhicule automobile avec un axe de rotation (A), muni d'un accouplement immobile en rotation d'un agencement de boîtier (12 ; 12a ; 12b) rempli de fluide sur un arbre menant d'un ensemble moteur, comprenant :
a) un premier moyeu de boîtier (20 ; 20a ; 20b) situé sur un côté de l'agencement de boîtier (12 ; 12a ; 12b) tourné vers une transmission,
b) un deuxième moyeu de boîtier (22 ; 22a ; 22b) situé sur un côté de l'agencement de boîtier (12 ; 12a ; 12b) tourné vers un ensemble moteur, monté dans une zone d'appui radial (50 ; 50a ; 50b) par rapport à un arbre mené (34 ; 34a ; 34b),
c) au moins un premier organe de frottement (26 ; 26a ; 26b) relié à l'agencement de boîtier (12 ; 12a ; 12b) en rotation conjointe,
d) au moins un deuxième organe de frottement (28 ; 28a ; 28b) relié à l'arbre mené (34 ; 34a ; 34b) en rotation conjointe par l'intermédiaire d'un moyeu de sortie (30),
e) une zone d'appui radial (42, 42a, 42b) supplémentaire qui, par rapport à la zone d'appui radial (50 ; 50a ; 50b) située sur le côté tourné vers l'ensemble moteur, est disposée à distance suivant la direction de l'axe de rotation (A) et près de la transmission, et dans laquelle est monté le premier moyeu de boîtier (20 ; 20a ; 20b) par rapport à l'arbre mené (34 ; 34a ; 34b),
**caractérisé en ce que** le mécanisme d'embrayage comprend :
f) un appui axial (54) qui est disposé dans la zone d'appui radial (50 ; 50a ; 50b ; 50c ; 50d) située sur le côté tourné vers l'ensemble moteur et qui est prévu pour le moyeu de sortie (30) par rapport au moyeu du boîtier (22) et par conséquent à l'agencement de boîtier (12), et
g) un autre palier radial (56) par l'intermédiaire duquel le moyeu de sortie (30) est monté sur le moyeu de boîtier (22) suivant la direction radiale.

2. Mécanisme d'embrayage selon la revendication 1,
**caractérisé en ce**
**que**, dans la zone d'appui radial (42) supplémentaire, le premier moyeu de boîtier (20) est monté par rapport à un boîtier de transmission (46) par l'intermédiaire d'un palier radial (44).

3. Mécanisme d'embrayage selon la revendication 1,
**caractérisé en ce**
**que**, dans la zone d'appui radial (42a) supplémentaire, le premier moyeu de boîtier (20a) coopère avec une zone (60a) radialement en saillie vers l'extérieur à la façon d'une bride pour former un appui axial pour le moyeu de sortie (30a).

4. Mécanisme d'embrayage selon la revendication 1,
**caractérisé en ce**
**que**, dans la zone d'appui radial (42b) supplémentaire, le premier moyeu de boîtier (20b) agit par l'intermédiaire du moyeu de sortie (30b) sur un palier radial (68b) interposé entre ce moyeu de sortie (30b) et l'arbre mené (34).
